(19) Europäisches Patentamt / European Patent Office / Office européen des brevets

(11) **EP 3 819 965 A1**

(12) **EUROPEAN PATENT APPLICATION**

(43) Date of publication:
**12.05.2021 Bulletin 2021/19**

(51) Int Cl.:
**H01M 4/131** (2010.01)   **H01M 4/1391** (2010.01)
**H01M 4/36** (2006.01)   **H01M 10/0562** (2010.01)
**H01M 4/02** (2006.01)

(21) Application number: **20205842.6**

(22) Date of filing: **05.11.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.11.2019   JP 2019201091**

(71) Applicant: **Seiko Epson Corporation
Tokyo 160-8801 (JP)**

(72) Inventors:
• TERAOKA, Tsutomu
  Suwa-shi, Nagano 392-8502 (JP)
• YOKOYAMA, Tomofumi
  Suwa-shi, Nagano 392-8502 (JP)
• YAMAMOTO, Hitoshi
  Suwa-shi, Nagano 392-8502 (JP)
• FURUSAWA, Masahiro
  Suwa-shi, Nagano 392-8502 (JP)
• TOYODA, Naoyuki
  Suwa-shi, Nagano 392-8502 (JP)

(74) Representative: **Miller Sturt Kenyon
9 John Street
London WC1N 2ES (GB)**

(54) **POSITIVE ELECTRODE ACTIVE MATERIAL POWDER COATED WITH SOLID ELECTROLYTE AND METHOD FOR PRODUCING THE SAME.**

(57)   A solid electrolyte coated positive electrode active material powder according to the present disclosure includes: a plurality of particles each having a mother particle formed of a positive electrode active material for a lithium ion secondary battery containing a complex oxide of Li and a transition metal T, and a coating layer formed of a garnet-type solid electrolyte represented by the following Formula (1) and coating at least a part of a surface of the mother particle:

$$Li_{7-x}La_3(Zr_{2-x}M_x)O_{12} \ldots \qquad (1)$$

(in Formula (1), M represents one or more metal elements selected from Ta, Sb, and Nb, and $0.1 \leq x < 0.7$).

FIG. 1

EP 3 819 965 A1

**Description**

The present application is based on, and claims priority from JP Application Serial Number 2019-201091, filed November 5, 2019, the disclosure of which is hereby incorporated by reference herein in its entirety.

BACKGROUND

1. Technical Field

The present disclosure relates to a solid electrolyte coated positive electrode active material powder and a method for producing a solid electrolyte coated positive electrode active material powder.

2. Related Art

In recent years, rapid charge and discharge characteristics are required in a lithium ion secondary battery. There is a problem that charge and discharge capacities generated during rapid charging and discharging decreases significantly. Therefore, experiments have been performed to reduce a so-called internal resistance such as an electric resistance of an active material layer which is a constituent member of a battery and an ionic conduction resistance of a separator layer. In particular, attention has been focused on a technique for reducing an internal resistance of a positive electrode active material layer that occupies a large proportion of an internal resistance of a battery. In order to reduce the internal resistance of the positive electrode active material layer, examples that have been put into practical use include an example in which an active material mixture is thinned and molded to reduce a resistance value, an example in which a carbon nanotube is adopted in a conductive auxiliary, and an example in which a part of oxygen that constitutes the positive electrode active material is substituted by nitrogen and an electronic conductivity of the positive electrode active material is improved.

However, since charge transfer resistance generated when lithium ions enter and leave from the positive electrode active material into and out of an organic electrolytic solution is caused by electrical characteristics unique to materials of the positive electrode active material and the organic electrolytic solution, measures to reduce the charge transfer resistance by design measures is not substantially found. In addition, during high rate charge and discharge, the lithium ions are deficient in a vicinity of an interface, and charge transfer reaction does not proceed, and thus rapid charge and discharge speeds are limited.

Therefore, in recent years, attention has been paid to an experiment to reduce the charge transfer resistance and to prevent ion deficiency during the high rate charge and discharge by providing a material that acts on an electrical state of an interface on which a charge transfer occurs between the positive electrode active material and the organic electrolytic solution.

For example, JP-A-2018-147726 discloses a positive electrode material having a structure in which a ferroelectric is provided on a surface of a positive electrode active material. Accordingly, a so-called hot spot in which a concentration of lithium ions is locally high is created, and a charge transfer frequency is increased, so that a charge transfer resistance during charge and discharge at a high rate is reduced.

JP-A-2019-3786 discloses a positive electrode active material having a structure in which specific active material particles are coated with a specific coating layer. Accordingly, similar effect as described above is obtained.

However, in the configuration disclosed in JP-A-2018-147726, since the ferroelectric lacks ion conductivity, there are problems that the internal resistance is increased and a capacity is reduced on the contrary during charge and discharge commonly used under a low load.

In the configuration disclosed in JP-A-2019-3786, although an ionic conductor is likely to become porous and an effect of improving a charge and discharge capacity retention ratio under a low load is obtained, a technique for drastically improving a charge and discharge performance under a high load is not achieved.

SUMMARY

The present disclosure is made to solve the above problems, and can be implemented as the following application examples.

A solid electrolyte coated positive electrode active material powder according to an application example of the present disclosure includes: a plurality of particles each having a mother particle formed of a positive electrode active material for a lithium ion secondary battery containing a complex oxide of Li and a transition metal T and a coating layer formed of a garnet-type solid electrolyte represented by the following Formula (1) and coating at least a part of a surface of the mother particle:

$$Li_{7-x}La_3(Zr_{2-x}M_x)O_{12} \ldots \qquad (1)$$

(in Formula (1), M represents one or more metal elements selected from Ta, Sb, and Nb, and $0.1 \leq x < 0.7$).

In the solid electrolyte coated positive electrode active material powder according to another application example of the present disclosure, an average particle diameter of the mother particle is 1.0 $\mu$m or more and 30 $\mu$m or less.

In the solid electrolyte coated positive electrode active material powder according to another application example of the present disclosure, an average thickness of the coating layer is 0.002 $\mu$m or more and 0.300 $\mu$m or less.

In the solid electrolyte coated positive electrode active material powder according to another application example of the present disclosure, the M is Ta, and $0.1 \leq x \leq 0.2$.

In the solid electrolyte coated positive electrode active material powder according to another application example of the present disclosure, the M is Sb, and $0.3 \leq x \leq 0.5$.

In the solid electrolyte coated positive electrode active material powder according to another application example of the present disclosure, the M is Nb, and $0.15 \leq x \leq 0.3$.

In the solid electrolyte coated positive electrode active material powder according to another application example of the present disclosure, the M is two or more metal elements selected from Ta, Sb, and Nb.

In the solid electrolyte coated positive electrode active material powder according to another application example of the present disclosure, the positive electrode active material for a lithium ion secondary battery is $LiCoO_2$.

A method for producing a solid electrolyte coated positive electrode active material powder according to an application example of the present disclosure includes: a mixed liquid preparation step of preparing a mixed liquid in which a metal compound containing a metal element M, a lithium compound, a lanthanum compound, and a zirconium compound are dissolved and particles of a positive electrode active material for a lithium ion secondary battery containing a complex oxide of Li and a transition metal T are dispersed; a first heating step of heating the mixed liquid to obtain a solid mixture; and a second heating step of heating the solid mixture to form a coating layer on a surface of a mother particle which is the particle of the positive electrode active material for a lithium ion secondary battery, the coating layer being formed of a garnet-type solid electrolyte represented by the following Formula (1):

$$Li_{7-x}La_3(Zr_{2-x}M_x)O_{12} \ldots \qquad (1)$$

(in Formula (1), M represents one or more metal elements selected from Ta, Sb, and Nb, and $0.1 \leq x < 0.7$).

BRIEF DESCRIPTION OF THE DRAWINGS

FIG. 1 is a cross-sectional view schematically showing a solid electrolyte coated positive electrode active material powder of the present disclosure.

FIG. 2 is a schematic cross-sectional view schematically showing a structure of a lithium ion secondary battery.

DESCRIPTION OF EXEMPLARY EMBODIMENTS

Hereinafter, preferred embodiments of the disclosure will be described in detail. 1 Solid Electrolyte Coated Positive Electrode Active Material Powder

First, a solid electrolyte coated positive electrode active material powder of the present disclosure will be described.

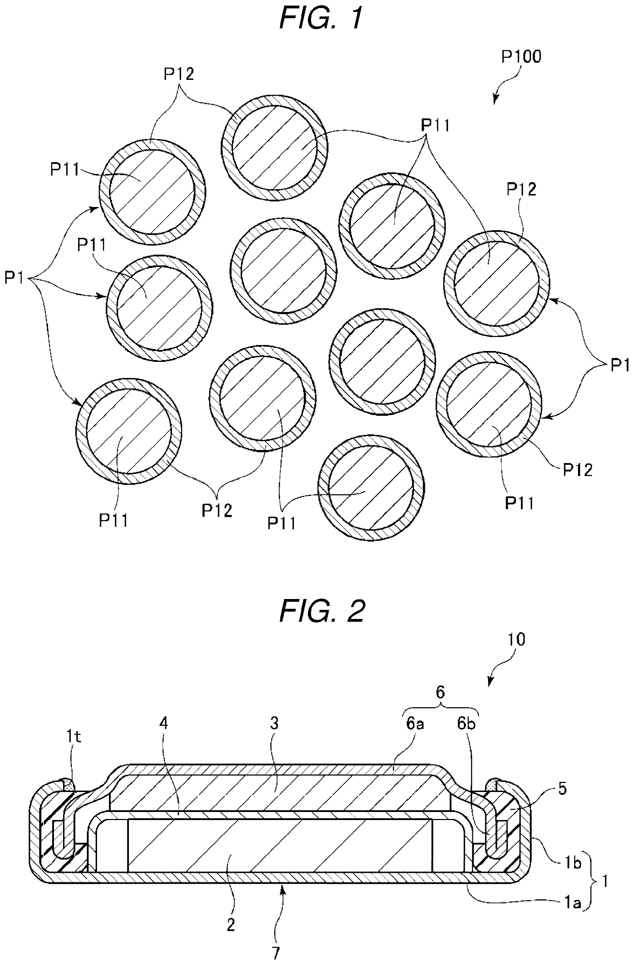

FIG. 1 is a cross-sectional view schematically showing the solid electrolyte coated positive electrode active material powder of the present disclosure. Although it is illustrated that an entire surface of a mother particle P11 is coated with a coating layer P12 for convenience in FIG. 1, the present disclosure is not limited thereto.

As shown in FIG. 1, a solid electrolyte coated positive electrode active material powder P100 of the present disclosure contains a plurality of constituent particles P1. The constituent particle P1 includes the mother particle P11 and the coating layer P12 that coats at least a part of a surface of the mother particle P11. The mother particle P11 is formed of a positive electrode active material for a lithium ion secondary battery containing a complex oxide of Li and a transition metal T. The coating layer P12 is formed of a garnet-type solid electrolyte represented by the following Formula (1).

$$Li_{7-x}La_3(Zr_{2-x}M_x)O_{12} \ldots \qquad (1)$$

(in Formula (1), M represents one or more metal elements selected from Ta, Sb, and Nb, and $0.1 \leq x < 0.7$ is satisfied).

As a result, it is possible to provide the solid electrolyte coated positive electrode active material powder that can be suitably used in production of a lithium ion secondary battery excellent in charge and discharge performance under a high load.

In contrast, if the above conditions are not satisfied, satisfactory results cannot be obtained.

For example, if a particle formed of the positive electrode active material for a lithium ion secondary battery is not coated with the coating layer, there is a problem that the charge and discharge performance under a high load is reduced.

In addition, in a case where even if the mother particle formed of the positive electrode active material for a lithium ion secondary battery is coated with a coating layer, but the coating layer is not formed of the garnet-type solid electrolyte represented by the above Formula (1), conductivity of Li is reduced, an internal resistance increases during low-load charge and discharge that is normally used, and a capacity is reduced.

More specifically, for example, when the solid electrolyte constituting the coating layer does not contain the metal element M, or when a content of the metal element M is too low even if the solid electrolyte contains the metal element M, the conductivity of Li is reduced, the solid electrolyte is similar to a dielectric since the solid electrolyte is an oxide, the internal resistance increases during the low-load charge and discharge that is normally used, and the capacity is reduced. In addition, when the content of the metal element M in the solid electrolyte constituting the coating layer is too large, the conductivity of Li is also reduced, the solid electrolyte is also similar to the dielectric since the solid electrolyte is an oxide, the internal resistance also increases during the low-load charge and discharge that is normally used, and the capacity is also reduced.

1.1 Mother Particle

The mother particle P11 constituting the constituent particle P1 is formed of a positive electrode active material capable of repeatedly storing and releasing electrochemical lithium ions. In particular, the positive electrode active material is the positive electrode active material for a lithium ion secondary battery containing the complex oxide of Li and the transition metal T.

The transition metal T may be any element as long as it exists between a Group 3 element and a Group 11 element in a periodic table, but the positive electrode active material for a lithium ion secondary battery constituting the mother particle P11 is preferably a complex oxide containing lithium and at least one selected from a group consisting of vanadium, chromium, manganese, iron, cobalt, nickel and copper, as the transition metal T.

Examples of such a complex oxide include $LiCoO_2$, $LiNiO_2$, $LiMn_2O_4$, $Li_2Mn_2O_3$, $LiCr_{0.5}Mn_{0.5}O_2$, $LiFePO_4$, $Li_2FeP_2O_7$, $LiMnPO_4$, $LiFeBO_3$, $Li_3V_2(PO_4)_3$, $Li_2CuO_2$, $Li_2FeSiO_4$, and $Li_2MnSiO_4$, and one type or a combination of two or more types selected from the examples can be used. As the positive electrode active material for a lithium ion secondary battery, for example, a fluoride such as $LiFeF_3$ may be used.

Among the examples, $LiCoO_2$ is preferable as the positive electrode active material for a lithium ion secondary battery constituting the mother particle P11.

Accordingly, the charge and discharge performance under a high load of the lithium ion secondary battery to which the solid electrolyte coated positive electrode active material powder P100 is applied can be further improved.

The mother particle P11 constituting the constituent particle P1 may contain other components in addition to the positive electrode active material for a lithium ion secondary battery containing the complex oxide of Li and the transition metal T. Examples of such components include other positive electrode active materials, such as a boride complex compound such as $LiBH_4$ and $Li_4BN_3H_{10}$, an iodine complex compound such as a polyvinylpyridine-iodine complex, and a non-metal compound such as sulfur.

However, a content of components other than the positive electrode active material for a lithium ion secondary battery containing the complex oxide of Li and the transition metal T in the mother particle P11 is preferably 3.0 mass% or less, more preferably 1.0 mass% or less, and even more preferably 0.3 mass% or less.

An average particle diameter of the mother particle P11 is not particularly limited. The average particle diameter is preferably 1.0 μm or more and 30 μm or less, more preferably 2.0 μm or more and 25 μm or less, and even more preferably 3.0 μm or more and 20 μm or less.

Accordingly, the charge and discharge performance under a high load of the lithium ion secondary battery to which the solid electrolyte coated positive electrode active material powder P100 is applied can be further improved.

In the present description, the average particle diameter refers to an average particle diameter on a volume basis. The average particle diameter can be calculated by, for example, adding a sample into methanol and measuring, by a Coulter counter particle size distribution analyzer (TA-II type manufactured by COULTER ELECTRONICS Inc.), a dispersion liquid dispersed for 3 minutes by an ultrasonic disperser using an aperture of 50 μm.

1.2 Coating Layer

The coating layer P12 that coats the mother particle P11 is formed of the solid electrolyte, in particular, the garnet-type solid electrolyte represented by the following Formula (1).

$$Li_{7-x}La_3(Zr_{2-x}M_x)O_{12} \ldots \qquad (1)$$

(In Formula (1), M represents one or more metal elements selected from Ta, Sb, and Nb, and $0.1 \leq x < 0.7$ is satisfied.)

M may be one or more metal elements selected from Ta, Sb, and Nb, but when M is Ta, it is preferable that $0.1 \leq x \leq 0.2$ is satisfied, and it is more preferable that $0.12 \leq x \leq 0.18$ is satisfied.

Accordingly, the charge and discharge performance under a high load of the lithium ion secondary battery to which the solid electrolyte coated positive electrode active material powder P100 is applied can be further improved.

In addition, when M is Sb, it is preferable that $0.3 \leq x \leq 0.5$ is satisfied, and it is more preferable that $0.35 \leq x \leq 0.45$ is satisfied.

Accordingly, the charge and discharge performance under a high load of the lithium ion secondary battery to which the solid electrolyte coated positive electrode active material powder P100 is applied can be further improved.

In addition, when M is Nb, it is preferable that $0.15 \leq x \leq 0.3$ is satisfied, and it is more preferable that $0.18 \leq x \leq 0.25$ is satisfied.

Accordingly, the charge and discharge performance under a high load of the lithium ion secondary battery to which the solid electrolyte coated positive electrode active material powder P100 is applied can be further improved.

In addition, when M is two or more metal elements selected from Ta, Sb, and Nb, the charge and discharge performance under a high load of the lithium ion secondary battery to which the solid electrolyte coated positive electrode active material powder P100 is applied can be further improved.

When M contains two or more metal elements selected from Ta, Sb, and Nb, a preferred combination is a combination of Ta and Sb.

Accordingly, the charge and discharge performance under a high load of the lithium ion secondary battery to which the solid electrolyte coated positive electrode active material powder P100 is applied can be particularly improved.

When M contains two or more metal elements selected from Ta, Sb, and Nb, it is preferable that $0.3 \leq x \leq 0.9$ is satisfied, and it is more preferable that $0.4 \leq x \leq 0.8$ is satisfied.

Accordingly, the effects described above are more remarkably exhibited.

The coating layer P12 may contain components other than the garnet-type solid electrolyte represented by the above Formula (1). Examples of such components include solid electrolytes and metal compounds having other crystal phases.

However, a content of components other than the garnet-type solid electrolyte represented by the above Formula (1) in the coating layer P12 is preferably 3.0 mass% or less, more preferably 1.0 mass% or less, and even more preferably 0.3 mass% or less.

An average thickness of the coating layer P12 is preferably 0.002 $\mu$m or more and 0.300 $\mu$m or less, more preferably 0.003 $\mu$m or more and 0.150 $\mu$m or less, and even more preferably 0.004 $\mu$m or more and 0.080 $\mu$m or less.

Accordingly, the charge and discharge performance under a high load of the lithium ion secondary battery to which the solid electrolyte coated positive electrode active material powder P100 is applied can be further improved.

In the present description, an average thickness of the coating layer P12 refers to a thickness of the coating layer 12 is calculated based on masses of the mother particles P11 and the coating layers P12 that are contained in the entire solid electrolyte coated positive electrode active material powder P100 and specific weights thereof when it is assumed that each of the mother particles P11 has a true sphere shape having the same diameter as the average particle diameter of the mother particles P11 and the coating layer P12 having a uniform thickness is formed on the entire outer surface of the mother particle P11.

When the average particle diameter of the mother particle P11 is defined as D ($\mu$m) and the average thickness of the coating layer P12 is defined as T ($\mu$m), it is preferable that $0.0005 \leq T/D \leq 0.2500$ is satisfied, it is more preferable that $0.0005 \leq T/D \leq 0.0700$ is satisfied, and it is even more preferable that $0.0010 \leq T/D \leq 0.0200$ is satisfied.

Accordingly, the charge and discharge performance under a high load of the lithium ion secondary battery to which the solid electrolyte coated positive electrode active material powder P100 is applied can be further improved.

The coating layer P12 may coat at least a part of the surface of the mother particle P11, and a coating ratio of the coating layer P12 to an outer surface of the mother particle P11, that is, a proportion of an area of a portion coated with the coating layer P12 to an entire area of the outer surface of the mother particle P11 is not particularly limited. The proportion is preferably 2% or more, more preferably 5% or more, and even more preferably 10% or more. An upper limit of the coating ratio may be 100% or less.

Accordingly, the charge and discharge performance under a high load of the lithium ion secondary battery to which the solid electrolyte coated positive electrode active material powder P100 is applied can be further improved.

1.3 Other Configurations

The constituent particle P1 may include the mother particle P11 and the coating layer P12 as described above, and may further include other configurations. Examples of such a configuration include at least one intermediate layer provided between the mother particle P11 and the coating layer P12, and another coating layer provided at a portion of the outer surface of the mother particle P11 not coated with the coating layer P12 and formed of a material different from that of the coating layer P12.

However, a proportion of configurations other than the mother particles P11 and the coating layers P12 in the constituent particles P1 is preferably 3.0 mass% or less, more preferably 1.0 mass% or less, and even more preferably 0.3 mass% or less.

The solid electrolyte coated positive electrode active material powder P100 may contain a plurality of the constituent particles P1 described above, and may further contain other configurations in addition to the constituent particles P1.

Examples of such a configuration include particles formed of a similar material as that of the mother particle P11 and not coated with the coating layers P12, particles formed of a similar material as that of the mother particle P11 and coated with a material other than the coating layer P12, and particles formed of a similar material as that of the coating layers P12 and not attached to the mother particles P11.

However, a proportion of the configurations other than the constituent particles P1 in the solid electrolyte coated positive electrode active material powder P100 is preferably 20 mass% or less, more preferably 10 mass% or less, and even more preferably 5 mass% or less.

A boundary between the mother particle P11 and the coating layer P12 may be clear as shown in FIG. 1. Alternatively, the boundary may not necessarily be clear. For example, a part of constituent components of one of the mother particle P11 and the coating layer P12 may be shifted to the other one.

2 Method for Producing Solid Electrolyte Coated Positive Electrode Active Material Powder

Next, a method for producing a solid electrolyte coated positive electrode active material powder of the present disclosure will be described.

The method for producing a solid electrolyte coated positive electrode active material powder of the present disclosure includes a mixed liquid preparation step, a first heating step, and a second heating step.

The mixed liquid preparation step is a step of preparing a mixed liquid in which the metal compound containing the metal element M, a lithium compound, a lanthanum compound, and a zirconium compound are dissolved and particles of the positive electrode active material for a lithium ion secondary battery containing the complex oxide of Li and the transition metal T are dispersed.

The first heating step is a step of heating the mixed liquid to obtain a solid mixture.

The second heating step is a step of heating the solid mixture to form the coating layer formed of the garnet-type solid electrolyte represented by the following Formula (1) on each of surfaces of the particles of the positive electrode active material for a lithium ion secondary battery as the mother particles.

$$Li_{7-x}La_3(Zr_{2-x}M_x)O_{12} \ldots \quad (1)$$

(In Formula (1), M represents one or more metal elements selected from Ta, Sb, and Nb, and $0.1 \leq x < 0.7$ is satisfied.)

Accordingly, it is possible to provide a method for producing a solid electrolyte coated positive electrode active material powder that can efficiently produce the solid electrolyte coated positive electrode active material powder that can be suitably used in the production of the lithium ion secondary battery excellent in the charge and discharge performance under a high load.

Hereinafter, each step will be described.

2.1 Mixed Liquid Preparation Step

In the mixed liquid preparation step, a mixed liquid is prepared in which the metal compound containing the metal element M, the lithium compound, the lanthanum compound, and the zirconium compound are dissolved and the particles of the positive electrode active material for a lithium ion secondary battery containing the complex oxide of Li and the transition metal T are dispersed.

In preparing the mixed liquid, an order of mixing components constituting the mixed liquid is not particularly limited. For example, a lithium raw material solution in which the lithium compound is dissolved, a lanthanum raw material solution in which the lanthanum compound is dissolved, a zirconium raw material solution in which the zirconium compound is dissolved, a metal raw material solution in which the metal compound containing the metal element M is dissolved, and the particles of the positive electrode active material for a lithium ion secondary battery can be mixed to obtain the mixed liquid.

In such a case, for example, the lithium raw material solution, the lanthanum raw material solution, the zirconium raw material solution, and the metal raw material solution may be mixed in advance before being mixed with the particles of the positive electrode active material for a lithium ion secondary battery. In other words, for example, the particles of the positive electrode active material for a lithium ion secondary battery may be mixed with a mixed solution of the lithium raw material solution, the lanthanum raw material solution, the zirconium raw material solution, and the metal raw material solution.

In the case described above, the particles of the positive electrode active material for a lithium ion secondary battery may be used for mixing with the above solution in a state of a dispersion liquid in which the particles of the positive electrode active material for a lithium ion secondary battery are dispersed in a dispersion medium.

As described above, when a plurality of types of liquids are used in the mixed liquid preparation step, a solvent and a dispersion medium that serve as constituent components of the solution and dispersion liquid may have a common composition or may have different compositions.

In the mixed liquid preparation step, it is preferable to use the lithium compound such that a content of lithium in the mixed liquid is 1.05 times or more and 1.2 times or less of stoichiometric compositions in the above Formula (1).

In the mixed liquid preparation step, it is preferable to use the lanthanum compound such that a content of lanthanum in the mixed liquid is equal to the stoichiometric compositions in the above Formula (1).

In the mixed liquid preparation step, it is preferable to use the zirconium compound such that a content of zirconium in the mixed liquid is equal to the stoichiometric compositions in the above Formula (1).

In the mixed liquid preparation step, it is preferable to use the metal compound containing the metal element M such that a content of M in the mixed liquid is equal to the stoichiometric compositions in the above Formula (1).

Examples of the lithium compound include a lithium metal salt and a lithium alkoxide. One type or a combination of two or more types among the examples of the lithium compound can be used. Examples of the lithium metal salt include lithium chloride, lithium nitrate, lithium sulfate, lithium acetate, lithium hydroxide, lithium carbonate, and (2,4-pentanedionato) lithium. Examples of the lithium alkoxide include lithium methoxide, lithium ethoxide, lithium propoxide, lithium isopropoxide, lithium butoxide, lithium isobutoxide, lithium secondary butoxide, lithium tertiary butoxide, and dipivaloyl methanatolithium. Among these, the lithium compound is preferably one or two or more selected from the group consisting of lithium nitrate, lithium sulfate, and (2,4-pentanedionato) lithium. A hydrate thereof may be used as a lithium source.

Examples of the lanthanum compound which is a metal compound as a lanthanum source include a lanthanum metal salt and a lanthanum alkoxide. One type or a combination of two or more types among the examples of the lanthanum compound can be used. Examples of the lanthanum metal salt include lanthanum chloride, lanthanum nitrate, lanthanum sulfate, lanthanum acetate, and tris(2,4-pentanedionato) lanthanum. Examples of the lanthanum alkoxide include lanthanum trimethoxide, lanthanum triethoxide, lanthanum tripropoxide, lanthanum triisopropoxide, lanthanum tributoxide, lanthanum triisobutoxide, lanthanum tri-secondary butoxide, lanthanum tri-tertiary butoxide, and dipivaloylmethanatolanthanum. Among these, the lanthanum compound is preferably at least one of the lanthanum nitrate and tris(2,4-pentanedionato) lanthanum. A hydrate thereof may be used as the lanthanum source.

Examples of the zirconium compound which is a metal compound as a zirconium source include a zirconium metal salt and a zirconium alkoxide. One type or a combination of two or more types among the examples of the zirconium compound may be used. Examples of the zirconium metal salt include zirconium chloride, zirconium oxychloride, zirconium oxynitrate, zirconium oxysulfate, zirconium oxyacetate, and zirconium acetate. Examples of the zirconium alkoxide include zirconium tetramethoxide, zirconium tetraethoxide, zirconium tetrapropoxide, zirconium tetraisopropoxide, zirconium tetrabutoxide, zirconium tetraisobutoxide, zirconium tetra-secondary butoxide, zirconium tetra-tertiary butoxide, and dipivaloylmethanatozirconium. Among these, the zirconium compound is preferably zirconium tetrabutoxide. A hydrate thereof may be used as the zirconium source.

Examples of a tantalum compound which is a metal compound as a tantalum source, as the metal element M, include a tantalum metal salt and a tantalum alkoxide. One type or a combination of two or more types among the examples of the tantalum compound may be used. Examples of the tantalum metal salt include tantalum chloride and tantalum bromide. Examples of the tantalum alkoxide include tantalum pentamethoxide, tantalum pentaethoxide, tantalum pentaisopropoxide, tantalum penta-normal-propoxide, tantalum pentaisobutoxide, tantalum penta-normal-butoxide, tantalum penta-secondary butoxide, and tantalum penta-tertiary butoxide. Among these, the tantalum compound is preferably tantalum pentaethoxide. A hydrate thereof may be used as the tantalum source.

Examples of an antimony compound which is a metal compound as an antimony source, as the metal element M, include an antimony metal salt and an antimony alkoxide. One type or a combination of two or more types among the examples of the antimony compound may be used. Examples of the antimony metal salt include antimony bromide, antimony chloride, and antimony fluoride. Examples of the antimony alkoxide include antimony trimethoxide, antimony triethoxide, antimony triisopropoxide, antimony tri-normal-propoxide, antimony triisobutoxide, and antimony tri-normal-butoxide. Among these, the antimony compound is preferably antimony triisobutoxide. A hydrate thereof may be used as the antimony source.

Examples of a niobium compound which is a metal compound as a niobium source, as the metal element M, include a niobium metal salt, a niobium alkoxide, and niobium acetylacetone. One type or a combination of two or more types among the examples of the niobium compound may be used. Examples of the niobium metal salt include niobium chloride, niobium oxychloride, and niobium oxalate. Examples of the niobium alkoxide include niobium ethoxides such as niobium pentaethoxide, niobium propoxide, niobium isopropoxide, and niobium secondary butoxide. Among these, the niobium compound is preferably niobium pentaethoxide. A hydrate thereof may be used as the niobium source.

As the particles of the positive electrode active material for a lithium ion secondary battery used in the preparation of the mixed liquid, for example, particles satisfying similar conditions as those of the mother particles P11 described above can be suitably used.

As the particles of the positive electrode active material for a lithium ion secondary battery, for example, particles having conditions different from those of the mother particles P11, particularly particles having particle diameter conditions different from that of the mother particles P11 may be used in consideration of crushing, aggregation, and the like in a process of producing the solid electrolyte coated positive electrode active material powder P100.

The solvent and the dispersion medium are not particularly limited, and various organic solvents or the like may be used. More specifically, examples of the solvent and the dispersion medium include alcohols, glycols, ketones, esters, ethers, organic acids, aromatics, and amides. A mixed solvent containing one type or a combination of two or more types selected from the examples of the solvent and the dispersion medium may be used. Examples of the alcohols include methyl alcohol, ethyl alcohol, n-propyl alcohol, isopropyl alcohol, n-butyl alcohol, allyl alcohol, and 2-n-butoxyethanol. Examples of the glycols include ethylene glycol, propylene glycol, butylene glycol, hexylene glycol, pentanediol, hexanediol, heptanediol, and dipropylene glycol. Examples of the ketones include dimethyl ketone, methyl ethyl ketone, methyl propyl ketone, and methyl isobutyl ketone. Examples of the esters include methyl formate, ethyl formate, methyl acetate, and methyl acetoacetate. Examples of the ethers include diethylene glycol monomethyl ether, diethylene glycol monoethyl ether, diethylene glycol dimethyl ether, ethylene glycol monomethyl ether, ethylene glycol monoethyl ether, and dipropylene glycol monomethyl ether. Examples of the organic acids include formic acid, acetic acid, 2-ethyl-butyric acid, and propionic acid. Examples of the aromatics include toluene, o-xylene, and p-xylene. Examples of the amides include formamide, N,N-dimethylformamide, N,N-diethylformamide, dimethylacetamide, and N-methylpyrrolidone. Among these, the solvent and the dispersion medium are at least one of 2-n-butoxyethanol and propionic acid.

The mixed liquid prepared in the present step preferably contains an oxo anion.

Accordingly, even when the heat treatment in the first heating step and the heat treatment in the second heating step are performed at a relatively low temperature, the coating layer P12 having excellent adhesion to the mother particle P11 can be suitably formed. As a result, reliability of the finally obtained solid electrolyte coated positive electrode active material powder P100 can be further improved.

In the present step, when the mixed liquid is prepared as a mixed liquid containing an oxo anion, metal salts containing oxo anions are preferably used as various metal compounds as a raw material for forming the coating layer P12 described above. Alternatively, an oxo acid compound containing an oxo anion without a metal element may be further used as a component different from the various metal compounds in the preparation of the mixed liquid.

Examples of the oxo anion include a halogen oxoate ion, a borate ion, a carbonate ion, an orthocarbonate ion, a carboxylate ion, a silicate ion, a nitrite ion, a nitrate ion, a phosphite ion, a phosphate ion, an arsenate ion, a sulfite ion, a sulfate ion, a sulfonate ion, and a sulfinate ion. Examples of the halogen oxoate ion include a hypochlorite ion, a chlorite ion, a chlorate ion, a perchlorate ion, a hypobromite ion, a bromite ion, a bromate ion, a perbromate ion, a hypoiodite ion, an iodite ion, an iodate ion, and a periodate ion.

The oxo acid compound may be added during or after the first heating step to be described later.

2.2 First Heating Step

In the first heating step, the mixed liquid obtained in the mixed liquid preparation step is heated to obtain the solid mixture.

The solid mixture obtained thus may be a solid mixture in which at least a part of the liquid components contained in the mixed liquid, that is, the solvent or the dispersion medium described above is removed.

When the mixed liquid contains an oxo anion, in the present step, a solid mixture containing an oxide different from the solid electrolyte constituting the coating layer P12 can be obtained.

Accordingly, in the second heating step, the coating layer P12 formed of a high quality solid electrolyte can be formed, and the adhesion between the formed coating layer P12 and the mother particle P11 can be further improved.

In the following description, when the mixed liquid contains an oxo anion, an oxide different from the solid electrolyte constituting the coating layer P12 and formed in the present step is also referred to as a "precursor oxide".

The heating in the present step is preferably performed under such a condition that a content of a liquid component contained in the mixed liquid is sufficiently low.

More specifically, the content of the liquid component contained in the solid mixture obtained in the present step, that is, a content of the solvent and the dispersion medium described above is preferably 1.0 mass% or less, and more preferably 0.1 mass% or less.

The heat treatment in the present step may be performed under a constant condition, or may be performed by combining different conditions.

For example, a heat treatment A mainly for the removal of the solvent and the dispersion medium described above, and a heat treatment B mainly for the reaction of the metal compound containing the metal element M, the lithium compound, the lanthanum compound, and the zirconium compound described above may be performed in combination.

In this case, for example, a gelled composition can be obtained at a site other than the particles of the positive electrode active material for a lithium ion secondary battery by the heat treatment A, and the liquid component can be hardly contained as described above by the subsequent heat treatment B. In particular, when the mixed liquid contains an oxo anion, the precursor oxide can be efficiently formed by the heat treatment B.

A condition of the heat treatment A depends on boiling points, vapor pressures, and the like of the solvent and the dispersion medium. A heating temperature in the heat treatment A is preferably 50°C or higher and 250°C or lower, more preferably 60°C or higher and 230°C or lower, and even more preferably 80°C or higher and 200°C or lower.

A heating time in the heat treatment A is preferably 10 minutes or longer and 180 minutes or shorter, more preferably 20 minutes or longer and 120 minutes or shorter, and even more preferably 30 minutes or longer and 60 minutes or shorter.

The heat treatment A may be performed in any atmosphere, may be performed in an oxidizing atmosphere such as air or an oxygen gas atmosphere, or may be performed in a non-oxidizing atmosphere of an inert gas such as a nitrogen gas, a helium gas, and an argon gas. The heat treatment A may be performed under reduced pressure or vacuum, or may be performed under pressurization.

In the heat treatment A, the atmosphere may be maintained under substantially the same conditions, or may be changed under different conditions.

A condition of the heat treatment B depends on a composition of the formed precursor oxide. A heating temperature in the heat treatment B is preferably 400°C or higher and 600°C or lower, more preferably 430°C or higher and 570°C or lower, and even more preferably 450°C or higher and 550°C or lower.

A heating time in the heat treatment B is preferably 5 minutes or longer and 180 minutes or shorter, more preferably 10 minutes or longer and 120 minutes or shorter, and even more preferably 15 minutes or longer and 60 minutes or shorter.

The heat treatment B may be performed in any atmosphere, may be performed in an oxidizing atmosphere such as air or an oxygen gas atmosphere, or may be performed in a non-oxidizing atmosphere of an inert gas such as a nitrogen gas, a helium gas, and an argon gas. The heat treatment B may be performed under reduced pressure or vacuum, or may be performed under pressurization. In particular, the heat treatment B is preferably performed in an oxidizing atmosphere.

The heat treatment A and the heat treatment B may be performed continuously, and for example, the temperature of the heat treatment A may be raised at a constant temperature rising rate without setting a time for maintaining the temperature in a predetermined range in the heat treatment A.

When the solid mixture obtained in the present step contains a precursor oxide, the precursor oxide preferably has a crystal phase different from the crystal phase of the solid electrolyte constituting the coating layer P12. In the present disclosure, "different" for the crystal phase is a broad concept including that not only types of crystal phases are not the same, but also types are the same but at least one lattice constant is different.

In particular, the coating layer P12 is formed of a solid electrolyte having a garnet-type crystal phase, while a crystal phase of the precursor oxide is preferably a pyrochlore-type crystal.

Accordingly, even when the heat treatment in the second heating step is performed at a lower temperature and a shorter time, the coating layer P12 formed of the solid electrolyte having excellent adhesion to the mother particle P11 and particularly excellent ion conductivity can be suitably formed.

In addition to the pyrochlore-type crystal described above, examples of the crystal phase of the precursor oxide may include a cubic crystal having a perovskite structure, a rock salt structure, a diamond structure, a fluorite structure, or a spinel structure, a ramsdellite type orthorhombic crystal, and a corundum type trigonal crystal.

A crystal particle diameter of the precursor oxide is not particularly limited, and is preferably 10 nm or more and 200 nm or less, more preferably 15 nm or more and 180 nm or less, and even more preferably 20 nm or more and 160 nm or less.

Accordingly, a melting temperature of the precursor oxide and the heating condition in the second heating step can be further relaxed by a so-called Gibbs-Thomson effect which is a melting point lowering phenomenon accompanied by an increase in surface energy. In addition, in the finally obtained solid electrolyte coated positive electrode active material powder P100, the adhesion between the mother particle P11 and the coating layer P12 can be further improved.

The precursor oxide is preferably formed of a substantially single crystal phase.

Accordingly, in the second heating step, since a crystal phase transition that occurs during forming of the solid electrolyte having the garnet-type crystal phase is substantially once, segregation of elements accompanying the crystal phase transition and generation of contaminating crystals due to thermal decomposition are reduced, and various characteristics of the solid electrolyte constituting the coating layer P12 are further improved.

In a case where only one exothermic peak in a range of 300°C or higher and 1000°C or lower is observed when the precursor oxide is measured by TG-DTA at a temperature rising rate of 10°C/min, it can be determined that the precursor oxide is formed of a "substantially single crystal phase".

### 2.3 Second Heating Step

In the second heating step, the solid mixture obtained in the first heating step described above is heated, and the coating layer P12 formed of the garnet-type solid electrolyte represented by the above Formula (1) is formed on each of the surfaces of the particles of the positive electrode active material for a lithium ion secondary battery as the mother particles P11. Accordingly, the solid electrolyte coated positive electrode active material powder P100 is obtained.

The present step is usually performed at a higher temperature than the heat treatment in the first heating step described above.

In particular, when the solid mixture obtained in the first heating step contains an oxo anion, a heating temperature in the second heating step is, for example, preferably 700°C or higher and 1000°C or lower, more preferably 730°C or higher and 980°C or lower, and even more preferably 750°C or higher and 950°C or lower.

Accordingly, the coating layer P12 formed of the solid electrolyte having excellent adhesion to the mother particle P11 and having excellent characteristics can be formed more reliably by the heat treatment at a relatively low temperature and in a relatively short time. More specifically, since the solid mixture obtained in the first heating step contains the oxo anion, a melting point of the precursor oxide can be effectively reduced, and the coating layer P12 having excellent adhesion to the mother particle P11 can be suitably formed while promoting crystal growth by the heat treatment at a relatively low temperature and in a relatively short time. In addition, due to an action capable of causing a reaction of incorporating lithium ions into the precursor oxide during the reaction, the garnet-type solid electrolyte having a composition represented by the above Formula (1) can be suitably formed at a low temperature.

In the second heating step, the heating temperature may be changed. For example, the second heating step may have a first stage in which the heat treatment is performed at a relatively low temperature, and a second stage in which the heat treatment is performed at a relatively high temperature by raising the temperature after the first stage. In such a case, a maximum temperature in the heating step is preferably within the range described above.

A heating time in the second heating step is not particularly limited, and is preferably 5 minutes or longer and 300 minutes or shorter, more preferably 10 minutes or longer and 120 minutes or shorter, and even more preferably 15 minutes or longer and 60 minutes or shorter.

Accordingly, the effects described above are more remarkably exhibited.

The second heating step may be performed in any atmosphere, may be performed in an oxidizing atmosphere such as air or an oxygen gas atmosphere, or may be performed in a non-oxidizing atmosphere of an inert gas such as a nitrogen gas, a helium gas, and an argon gas. The second heating step may be performed under reduced pressure or vacuum, or may be performed under pressurization. In particular, the second heating step is preferably performed in an oxidizing atmosphere.

In the second heating step, the atmosphere may be maintained under substantially the same conditions, or may be changed under different conditions.

Even when the solid electrolyte coated positive electrode active material powder P100 obtained as described above is produced using the mixed liquid containing the oxo anion, since the oxo anion is usually sufficiently removed in the second heating step, a content of the oxo anion contained in the finally obtained solid electrolyte coated positive electrode active material powder P100 is sufficiently low. More specifically, the content of the oxo anion in the solid electrolyte coated positive electrode active material powder P100 is generally 100 ppm or less, particularly preferably 50 ppm or less, and more preferably 10 ppm or less.

### 3 Lithium Ion Secondary Battery

Next, a lithium ion secondary battery to which the present disclosure is applied will be described.

The lithium ion secondary battery according to the present disclosure is produced using the solid electrolyte coated positive electrode active material powder according to the present disclosure as described above.

Such a lithium ion secondary battery is excellent in the charge and discharge performance under a high load.

Hereinafter, a specific configuration of the lithium ion secondary battery will be described.

FIG. 2 is a schematic cross-sectional view schematically showing a structure of a lithium ion secondary battery. In particular, FIG. 2 shows a coin type battery as an example of the lithium ion secondary battery.

As shown in FIG. 2, a lithium ion secondary battery 10 has an exterior body 7 having a bottomed battery case 1 having an opening, a sealing plate 6 for closing the opening of the battery case 1, and a gasket 5 interposed between an end portion 1t of a side portion 1b of the battery case 1 and a peripheral portion 6b of the sealing plate 6.

A positive electrode 2, a negative electrode 3, a separator 4 interposed therebetween, and an electrolyte solution (not shown) are accommodated inside the exterior body 7.

The positive electrode 2 is accommodated in the exterior body 7 so as to face a bottom plate portion 1a of the battery case 1, and the negative electrode 3 is accommodated in the exterior body 7 so as to face a top plate portion 6a of the sealing plate 6. Accordingly, the battery case 1 functions as a positive electrode terminal, and the sealing plate 6 functions as a negative electrode terminal.

By crimping the end portion 1t of the battery case 1 to the peripheral portion 6b of the sealing plate 6 via the gasket 5, the positive electrode 2, the negative electrode 3, the separator 4, and the electrolyte solution are hermetically accommodated in the exterior body 7.

The positive electrode 2 is formed of a positive electrode mixture containing at least the solid electrolyte coated positive electrode active material powder P100.

The positive electrode mixture preferably further contains a conductive auxiliary and a binder in addition to the solid electrolyte coated positive electrode active material powder P100.

Examples of the conductive auxiliary include carbon black such as acetylene black and Ketjen black, and graphites such as artificial graphite, and one type or a combination of two or more types selected from the examples can be used.

Examples of the binder include fluororesins such as polyvinylidene fluoride, styrene-butadiene rubber, modified acrylonitrile rubber, ethylene-acrylic acid copolymer, and one type or a combination of two or more types selected from the examples can be used.

A content of the solid electrolyte coated positive electrode active material powder P100 in the positive electrode 2 is preferably 60 mass% or more, more preferably 70 mass% or more and 99 mass% or less, and even more preferably 80 mass% or more and 98 mass% or less.

The negative electrode 3 is made of, for example, a lithium metal or a lithium alloy. Examples of the lithium alloy include a Li-Al alloy, a Li-Sn alloy, a Li-Si alloy, and a Li-Pb alloy.

The negative electrode 3 may be formed of a negative electrode mixture containing a negative electrode active material and a binder.

The negative electrode active material is not particularly limited. Examples of the negative electrode active material include carbon materials such as natural graphite, artificial graphite and non-graphitizable carbon, and metal oxides such as silicon oxide, lithium titanate, niobium pentoxide and molybdenum dioxide, and one type or a combination of two or more types selected from the examples can be used.

Examples of the binder include fluororesins such as polyvinylidene fluoride, styrene-butadiene rubber, modified acrylonitrile rubber, ethylene-acrylic acid copolymer, and one type or a combination of two or more types selected from the examples can be used.

The negative electrode mixture may further contain a conductive auxiliary. Examples of the conductive auxiliary include carbon black such as acetylene black and Ketjen black, and graphites such as artificial graphite, and one type or a combination of two or more types selected from the examples can be used.

The electrolyte solution usually contains a non-aqueous solvent and a salt that is a solute that dissolves in the non-aqueous solvent. A concentration of the solute in the electrolyte solution is preferably 0.3 mol/L or more and 2.0 mol/L or less.

Examples of the non-aqueous solvent include cyclic carbonates, chain carbonates, chain ethers, cyclic ethers, carbonate compounds such as ethylene carbonate and diethyl carbonate, and one type or a combination of two or more types selected from the examples can be used.

Examples of the solute include $LiBF_4$, $LiPF_6$, $LiClO_4$, $LiCF_3SO_3$, $LiC_4F_9SO_3$, $LiN(CF_3SO_2)_2$, and $LiN(C_2F_5SO_2)_2$, and one type or a combination of two or more types selected from the examples can be used.

The separator 4 may be any material capable of preventing a short circuit between the positive electrode 2 and the negative electrode 3.

Examples of the separator 4 include woven fabrics, non-woven fabrics, and microporous films formed of polyolefin and polyester.

Although preferred embodiments according to the present disclosure have been described above, the present disclosure is not limited thereto.

For example, the method for producing a solid electrolyte coated positive electrode active material powder of the present disclosure may be applied to a method having another step in addition to the steps described above.

The solid electrolyte coated positive electrode active material powder of the present disclosure may be any powder as long as the solid electrolyte coated positive electrode active material powder includes a plurality of particles each having the mother particle formed of the positive electrode active material for a lithium ion secondary battery containing the complex oxide of Li and the transition metal T and the coating layer formed of the garnet-type solid electrolyte represented by the above Formula (1), and is not limited to the powder manufactured by the production method described above.

The lithium ion secondary battery to which the present disclosure is applied is not limited to that of the above embodiment. For example, the present disclosure may be applied to the lithium ion secondary battery having a shape other than a coin type. In addition, the present disclosure may be applied to an all-solid-state lithium ion secondary battery.

Examples

Next, specific examples according to the present disclosure will be described. 4 Production of Solid Electrolyte Coated Positive Electrode Active Material Powder

Example 1

First, a first solution containing lanthanum nitrate hexahydrate as a lanthanum source, tetrabutoxy zirconium as a zirconium source, tri-n-butoxyantimony as an antimony source, pentaethoxy tantalum as a tantalum source, and 2-n-butoxyethanol as a solvent at a predetermined ratio was prepared, and a second solution containing lithium nitrate as a lithium compound and 2-n-butoxyethanol as a solvent at a predetermined ratio was prepared.

Next, the first solution and the second solution were mixed at a predetermined ratio to obtain a mixed liquid in which a content ratio Li, La, Zr, Ta, and Sb was 6.3:3:1.3:0.5:0.2 in a molar ratio.

Next, 500 parts by mass of the mixed liquid described above was added into 100 parts by mass of $LiCoO_2$ particles as the positive electrode active material for a lithium ion secondary battery, and then ultrasonic dispersion was performed using an ultrasonic cleaner US-1 with temperature control function manufactured by AS ONE Corporation at 55°C for 2 hours under conditions of oscillation frequency of 38 kHz and output of 80 W.

Thereafter, centrifugation was performed using a centrifuge at 10,000 rpm for 3 minutes and a supernatant was removed.

An obtained precipitate was transferred to a crucible made of MgO, a lid was placed on the crucible, and the crucible was baked at 900°C for 3 hours while supplying dry air at a flow rate of 1 L/min using an atmosphere control furnace, and was gradually cooled to a room temperature. Accordingly, the solid electrolyte coated positive electrode active material powder was obtained containing many constituent particles in each of which the $LiCoO_2$ particle as the mother particle was coated with a coating layer formed of a garnet-type solid electrolyte represented by $Li_{6.3}La_3(Zr_{1.3}Ta_{0.5}Sb_{0.2})O_{12}$.

Examples 2 to 12

The solid electrolyte coated positive electrode active material powder was produced similarly as in Example 1 except that a type and an amount of a raw material used for the preparation of the mixed liquid and a type and an amount of the positive electrode active material for a lithium ion secondary battery were adjusted such that the solid electrolyte coated positive electrode active material powder had a composition shown in Table 1.

Comparative Example 1

In the present comparative example, without forming a coating layer on the $LiCoO_2$ particles as the positive electrode active material for a lithium ion secondary battery, an aggregate of the $LiCoO_2$ particles was directly used as the positive electrode active material powder. In other words, in the present comparative example, the positive electrode active material powder not coated with the solid electrolyte was prepared in place of the solid electrolyte coated positive electrode active material powder.

Comparative Example 2

A coating layer formed of $LiNbO_3$ was deposited in a thickness of 3 nm on a surface of the $LiCoO_2$ particle as the positive electrode active material for a lithium ion secondary battery using a sputtering apparatus to produce the solid electrolyte coated positive electrode active material powder.

Comparative Example 3

In the present comparative example, without forming a coating layer on $LiNi_{0.5}Co_{0.2}Mn_{0.3}O_2$ particles as the positive electrode active material for a lithium ion secondary battery, an aggregate of the $LiNi_{0.5}Co_{0.2}Mn_{0.3}O_2$ particles was directly used as the positive electrode active material powder. In other words, in the present comparative example, the positive electrode active material powder not coated with the solid electrolyte was prepared in place of the solid electrolyte coated positive electrode active material powder.

Conditions of the solid electrolyte coated positive electrode active material powder of respective Examples and Comparative Examples are collectively shown in Table 1. However, Comparative Examples 1 and 3 show conditions of the positive electrode active material powder not coated with the solid electrolyte instead of that of the solid electrolyte coated positive electrode active material powder. The solid electrolyte coated positive electrode active material powder obtained in each of the Examples and Comparative Examples had a content of the solvent of 0.1 mass% or less and the content of the oxo anion of 100 ppm or less. When a backscattered electron image was obtained for each particle surface of the solid electrolyte coated positive electrode active material powder of each of the Examples and Comparative Examples 2 and 3 by measurement using a field emission type scanning electron microscope with EDS (manufactured by JEOL Ltd.), nothing was observed on the surface of the positive electrode active material for a lithium ion secondary battery in which the coating layer was not formed. A white contrast was observed on a surface of the constituent particle of the solid electrolyte coated positive electrode active material powder in which the coating layer of $Li_{6.3}La_3(Zr_{1.3}Ta_{0.5}Sb_{0.2})O_{12}$ was formed on the surface of $LiCoO_2$ particle. As a concentration increased, the white contrast increased. This is likely to be $Li_{6.3}La_3(Zr_{1.3}Ta_{0.5}Sb_{0.2})O_{12}$ produced from the precursor. Since only diffraction lines attributed to $LiCoO_2$ were confirmed in all cases by an X-ray diffractometer, it is considered that a film thickness reduces as a diffraction line intensity derived from $Li_{6.3}La_3(Zr_{1.3}Ta_{0.5}Sb_{0.2})O_{12}$ falls below a lower limit of detection. According to the EDS of the field emission type scanning electron microscope with EDS (manufactured by JEOL Ltd.), the coating layer was thin and Ta and Sb low in element% were not detected, but La and Zr were detected on the surface of $LiCoO_2$ particle. Since a composition ratio of La and Zr was 3:1.3 based on a composition ratio of $Li_{6.3}La_3(Zr_{1.3}Ta_{0.5}Sb_{0.2})O_{12}$, and a ratio of element% of La and Zr detected by this measurement was 3.5:1, it is considered that the composition ratios were substantially the same, and $Li_{6.3}La_3(Zr_{1.3}Ta_{0.5}Sb_{0.2})O_{12}$ was produced. When the coating layer after the first heating step in the process of producing the solid electrolyte coated positive electrode active material powder of each of the Examples, was measured at a temperature rising rate of 10°C/min with TG-DTA, only one exothermic peak was observed in a range of 300°C or higher to 1,000°C or lower. Therefore, it can be said that the coating layer after the first heating step in each of the Examples is substantially formed of a single crystal phase. In each of the Examples, the coating layer of the constituent particle of the finally obtained solid electrolyte coated positive electrode active material powder was formed of the solid electrolyte having the garnet-type crystal phase, whereas the precursor oxide constituting the coating layer after the first heating step had a pyrochlore-type crystal. In each of the Examples, the content of the liquid component contained in a composition after the first heating step was 0.1 mass% or less. Further, in each of the Examples, a crystal particle diameter of the oxide contained in the coating layer after the first heating step was 20 nm or more and 160 nm or less.

Table 1

| | Mother Particle | | Coating Layer | | | T/D |
|---|---|---|---|---|---|---|
| | Composition | Average Particle Diameter D [μm] | Composition | Crystal Phase | Thickness T [μm] | |
| Example 1 | $LiCoO_2$ | 7.0 | $Li_{6.3}La_3(Zr_{1.3}Ta_{0.5}Sb_{0.2})O_{12}$ | Garnet-type | 0.0047 | 0.0007 |
| Example 2 | $LiCoO_2$ | 7.0 | $Li_{6.3}La_3(Zr_{1.3}Ta_{0.5}Sb_{0.2})O_{12}$ | Garnet-type | 0.0225 | 0.0031 |
| Example 3 | $LiCoO_2$ | 7.0 | $Li_{6.3}La_3(Zr_{1.3}Ta_{0.5}Sb_{0.2})O_{12}$ | Garnet-type | 0.0361 | 0.0052 |

(continued)

| | Mother Particle | | Coating Layer | | | T/D |
|---|---|---|---|---|---|---|
| | Composition | Average Particle Diameter D [μm] | Composition | Crystal Phase | Thickness T [μm] | |
| Example 4 | $LiNi_{0.5}Co_{0.2}Mn_{0.3}O_2$ | 7.0 | $Li_{6.3}La_3(Zr_{1.3}Ta_{0.5}Sb_{0.2})O_{12}$ | Garnet-type | 0.0300 | 0.0043 |
| Example 5 | $LiCoO_2$ | 7.0 | $Li_{6.9}La_3(Zr_{1.9}Ta_{0.1})O_{12}$ | Garnet-type | 0.0232 | 0.0033 |
| Example 6 | $LiCoO_2$ | 7.0 | $Li_{6.8}La_3(Zr_{1.8}Ta_{0.2})O_{12}$ | Garnet-type | 0.0228 | 0.0033 |
| Example 7 | $LiCoO_2$ | 7.0 | $Li_{6.7}La_3(Zr_{1.7}Sb_{0.3})O_{12}$ | Garnet-type | 0.0227 | 0.0032 |
| Example 8 | $LiCoO_2$ | 7.0 | $Li_{6.5}La_3(Zr_{1.5}Sb_{0.5})O_{12}$ | Garnet-type | 0.0231 | 0.0033 |
| Example 9 | $LiCoO_2$ | 7.0 | $Li_{6.85}La_3(Zr_{1.85}Nb_{0.15})O_{12}$ | Garnet-type | 0.0240 | 0.0034 |
| Example 10 | $LiCoO_2$ | 7.0 | $Li_{6.7}La_3(Zr_{1.7}Nb_{0.3})O_{12}$ | Garnet-type | 0.0233 | 0.0033 |
| Example 11 | $LiCoO_2$ | 1.2 | $Li_{6.3}La_3(Zr_{1.3}Ta_{0.5}Sb_{0.2})O_{12}$ | Garnet-type | 0.0212 | 0.0018 |
| Example 12 | $LiCoO_2$ | 28.0 | $Li_{6.3}La_3(Zr_{1.3}Ta_{0.5}Sb_{0.2})O_{12}$ | Garnet-type | 0.0231 | 0.0001 |
| Comparative Example 1 | $LiCoO_2$ | 7.0 | - | - | - | - |
| Comparative Example 2 | $LiCoO_2$ | 7.0 | $LiNbO_3$ | Trigonal | 0.0030 | 0.0004 |
| Comparative Example 3 | $LiNi_{0.5}Co_{0.2}Mn_{0.3}O_2$ | 7.0 | - | - | - | - |

5 Evaluation

First, an electric measuring cell was produced using the solid electrolyte coated positive electrode active material powder of each of the Examples and Comparative Examples 2 and 3 in the following manner. In Comparative Examples 1 and 4, the electric measuring cell was produced similarly as in the Examples and Comparative Examples 2 and 3, except that the positive electrode active material powder not coated with the solid electrolyte was used in place of the solid electrolyte coated positive electrode active material powder.

First, after the solid electrolyte coated positive electrode active material powder was powder-mixed with acetylene black (Denka Black manufactured by Denka Co., Ltd.) as the conductive auxiliary, an n-methylpyrrolidinone solution of 10 mass% of polyvinylidene fluoride (manufactured by Sigma-Aldrich Japan) was added to obtain a slurry.

A content ratio of the solid electrolyte coated positive electrode active material powder, acetylene black, and polyvinylidene fluoride in the obtained slurry was 90:5:5.

Next, the slurry was applied onto an Al foil and dried under vacuum to form a positive electrode.

The formed positive electrode was punched to have a diameter of 13 mm, Celgard #2400 (manufactured by Asahi Kasei) are stacked as a separator, an organic electrolytic solution manufactured by Kishida Chemical Co., Ltd. and containing $LiPF_6$ as a solute and ethylene carbonate and diethyl carbonate as a non-aqueous solvent (LBG-96533; 1 mol/L $LiPF_6$ EC:DEC (1:1 v/v%)) was injected, and a lithium metal foil manufactured by Honjo Chemical Co., Ltd. was used as the negative electrode and sealed in a CR2032 type coin cell, and thus the electric measuring cell was obtained.

Thereafter, the obtained electric measuring cell was connected to a Hokuto Denko battery charge and discharge evaluation system HJ1001SD8, a limiting voltage was set to 4.2 V and 2.8 V, a charging current was set based on mass of the mother particle, and CCCV charge and CC discharge was performed with 0.2C: 8 times, 0.5C: 5 times, 1C: 5 times, 2C: 5 times, 3C: 5 times, 5C: 5 times, 8C: 5 times, 10C: 5 times, 16C: 5 times and 0.2C: 5 times. After repeating cycles at the same C-rate, charge and discharge characteristics were evaluated by a method of increasing the C-rate. Charge and discharge current at this time was calculated and set, based on a weight of the positive electrode active material of each cell with a practical capacity of $LiCoO_2$ being set to 137 mAh/g and a practical capacity of NCM523 being set to 160 mAh/g.

Table 2 shows discharge capacities at 16C discharge in a 5th cycle. It can be said that the larger this value is, the better the charge and discharge performance under a high load is.

Table 2

|  | Discharge Capacity at 16C Discharge in 5th Cycle [mAh] |
| --- | --- |
| Example 1 | 108 |
| Example 2 | 110 |
| Example 3 | 101 |
| Example 4 | 40 |
| Example 5 | 84 |
| Example 6 | 80 |
| Example 7 | 82 |
| Example 8 | 80 |
| Example 9 | 82 |
| Example 10 | 83 |
| Example 11 | 100 |
| Example 12 | 73 |
| Comparative Example 1 | 62 |
| Comparative Example 2 | 80 (Low-load Side Capacity Reduction) |
| Comparative Example 3 | 19 |

As is clear from Table 2, good results were obtained in the present disclosure. In contrast, satisfactory results were not obtained in the comparative examples.

**Claims**

1. A solid electrolyte coated positive electrode active material powder comprising:
   a plurality of particles each having:

   a mother particle formed of a positive electrode active material for a lithium ion secondary battery containing a complex oxide of Li and a transition metal T; and
   a coating layer formed of a garnet-type solid electrolyte represented by the following Formula (1) and coating at least a part of a surface of the mother particle:

   $$Li_{7-x}La_3(Zr_{2-x}M_x)O_{12} \dots \qquad (1)$$

   (in Formula (1), M represents one or more metal elements selected from Ta, Sb, and Nb, and $0.1 \leq x < 0.7$).

2. The solid electrolyte coated positive electrode active material powder according to claim 1, wherein an average particle diameter of the mother particle is 1.0 μm or more and 30 μm or less.

3. The solid electrolyte coated positive electrode active material powder according to claim 1, wherein an average thickness of the coating layer is 0.002 $\mu$m or more and 0.300 $\mu$m or less.

4. The solid electrolyte coated positive electrode active material powder according to claim 1, wherein the M is Ta, and

$$0.1 \leq x \leq 0.2.$$

5. The solid electrolyte coated positive electrode active material powder according to claim 1, wherein the M is Sb, and

$$0.3 \leq x \leq 0.5.$$

6. The solid electrolyte coated positive electrode active material powder according to claim 1, wherein the M is Nb, and

$$0.15 \leq x \leq 0.3.$$

7. The solid electrolyte coated positive electrode active material powder according to claim 1, wherein the M is two or more metal elements selected from Ta, Sb, and Nb.

8. The solid electrolyte coated positive electrode active material powder according to claim 1, wherein the positive electrode active material for a lithium ion secondary battery is $LiCoO_2$.

9. A method for producing a solid electrolyte coated positive electrode active material powder comprising:

a mixed liquid preparation step of preparing a mixed liquid in which a metal compound containing a metal element M, a lithium compound, a lanthanum compound, and a zirconium compound are dissolved and particles of a positive electrode active material for a lithium ion secondary battery containing a complex oxide of Li and a transition metal T are dispersed;
a first heating step of heating the mixed liquid to obtain a solid mixture; and
a second heating step of heating the solid mixture to form a coating layer on a surface of a mother particle which is the particle of the positive electrode active material for a lithium ion secondary battery, the coating layer being formed of a garnet-type solid electrolyte represented by the following Formula (1):

$$Li_{7-x}La_3(Zr_{2-x}M_x)O_{12} \dots \qquad (1)$$

(in Formula (1), M represents one or more metal elements selected from Ta, Sb, and Nb, and $0.1 \leq x < 0.7$).

# FIG. 1

# FIG. 2

Europäisches
Patentamt

European
Patent Office

Office européen
des brevets

## EUROPEAN SEARCH REPORT

Application Number

EP 20 20 5842

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/212120 A1 (MURATA MANUFACTURING CO [JP]) 22 November 2018 (2018-11-22)<br>* paragraph [0048] - paragraph [0050] *<br>* paragraph [0052] *<br>* paragraph [0079] *<br>* paragraph [0034] *<br>----- | 1-9 | INV.<br>H01M4/131<br>H01M4/1391<br>H01M4/36<br>H01M10/0562<br>H01M4/02 |
| A | CN 106 876 668 A (NEXTEV LTD) 20 June 2017 (2017-06-20)<br>* The content of invention; page 2, paragraph 1 *<br>* page 3, line 19 - line 24 *<br>----- | 1-9 | |
| A | CN 108 054 378 A (INST PHYSICS CAS) 18 May 2018 (2018-05-18)<br>* claims 1-4 *<br>* paragraph [0036] - paragraph [0037] *<br>----- | 1-9 | |
| A | US 2018/219219 A1 (ITO SEITARO [JP] ET AL) 2 August 2018 (2018-08-02)<br>* paragraphs [0043], [0046] *<br>----- | 1-9 | TECHNICAL FIELDS SEARCHED (IPC)<br><br>H01M |

The present search report has been drawn up for all claims

| Place of search | Date of completion of the search | Examiner |
|---|---|---|
| Munich | 22 March 2021 | Tylus, Urszula |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 20 20 5842

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2021

| Patent document cited in search report | | | Publication date | Patent family member(s) | | | Publication date |
|---|---|---|---|---|---|---|---|
| WO | 2018212120 | A1 | 22-11-2018 | NONE | | | |
| CN | 106876668 | A | 20-06-2017 | NONE | | | |
| CN | 108054378 | A | 18-05-2018 | NONE | | | |
| US | 2018219219 | A1 | 02-08-2018 | JP | 2018106974 | A | 05-07-2018 |
| | | | | KR | 20180076275 | A | 05-07-2018 |
| | | | | US | 2018219219 | A1 | 02-08-2018 |

EPO FORM P0459

For more details about this annex : see Official Journal of the European Patent Office, No. 12/82

**EP 3 819 965 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019201091 A
- JP 2018147726 A
- JP 2019003786 A